# EUROPÄISCHE PATENTSCHRIFT

(11) **EP 2 837 081 B1**
(45) Veröffentlichungstag und Bekanntmachung des Hinweises auf die Patenterteilung: **12.06.2019**
(21) Anmeldenummer: 13715687.3
(22) Anmeldetag: 11.04.2013
(51) Int. Cl.: H02J 7/00

(54) **AUFSATZ FÜR LICHTPOLYMERISATIONSGERÄT UND LADESTATION HIERZU**
ATTACHMENT FOR A PHOTOPOLYMERIZATION DEVICE AND CHARGING STATION THEREFOR
CAISSON POUR DISPOSITIF DE PHOTOPOLYMÉRISATION ET STATION DE RECHARGE POUR CELUI-CI

(30) Priorität: 13.04.2012 DE 102012007300
(43) Veröffentlichungstag der Anmeldung: 18.02.2015
(73) Patentinhaber: Kulzer GmbH, 63450 Hanau (DE)
(72) Erfinder: SCHMID, Stephan, 63695 Glauburg (DE)
(74) Vertreter: Bendele, Tanja
(86) Internationale Anmeldenummer: PCT/EP2013/057551
(87) Internationale Veröffentlichungsnummer: WO 2013/153144

(56) Entgegenhaltungen:
- EP-A2- 0 485 769
- EP-A2- 0 942 478
- WO-A1-2008/055597
- WO-A2-2009/137433
- US-A1- 2008 150 480

## Beschreibung

Die Erfindung betrifft eine Ladestation für ein kabelloses Lichtpolymerisationsgerät zum Aushärten von lichtpolymerisierbaren Dentalmaterialien, wobei das Lichtpolymerisationsgerät einen Speicher für elektrischen Strom, insbesondere einen Akkumulator oder einen Kondensator umfasst und wobei die Ladestation wenigstens einen elektrisch leitenden Ladekontakt umfasst, über den eine elektrisch leitende Verbindung mit einem elektrisch leitenden Gegenladekontakt des Lichtpolymerisationsgeräts zum Aufladen des Speichers realisiert ist, wenn das Lichtpolymerisationsgerät an die Ladestation angeschlossen ist.

Die Erfindung betrifft auch ein kabelloses Lichtpolymerisationsgerät zum Aushärten von lichtpolymerisierbaren Dentalmaterialien, wobei das Lichtpolymerisationsgerät einen Speicher für elektrischen Strom, insbesondere einen Akkumulator oder einen Kondensator umfasst und wobei das Lichtpolymerisationsgerät wenigstens einen elektrisch leitenden Ladekontakt umfasst, über den eine elektrisch leitende Verbindung mit einem elektrisch leitenden Gegenladekontakt einer Ladestation für das Lichtpolymerisationsgerät zum Aufladen des Speichers herstellbar ist, wenn das Lichtpolymerisationsgerät an die Ladestation angeschlossen ist.

Ferner betrifft die Erfindung einen Aufsatz zur Verbindung eines kabellosen Lichtpolymerisationsgeräts mit einer Ladestation und einen Lichtpolymerisationsapparat umfassend eine Ladestation, ein handführbares Lichtpolymerisationsgerät und einen Aufsatz.

Lichtpolymerisationsgeräte werden zum Aushärten dentaler Restaurationsmaterialien verwendet. Aus den dentalen Restaurationsmaterialien, die Kunststoffe sind, werden beispielsweise Kunststofffüllungen, Zahnprothesen oder Teile davon hergestellt, wobei die Lichtpolymerisationsgeräte die dentalen Restaurationsmaterialien mit einem Licht geeigneter Wellenlänge bestrahlen und der Kunststoff durch die Bestrahlung aushärtet.

Aus der DE 20 2004 001 189 U1 ist ein Lichtpolymerisationsgerät in Form eines zahnärztlichen Handstücks mit einem Gehäuse und einer darin angeordneten LED als Lichtquelle, die blaues Licht emittiert, bekannt. Das Lichtpolymerisationsgerät umfasst einen Akkumulator, mit dem die LED betrieben wird. Solche Akkumulatoren werden aufgeladen, indem das Lichtpolymerisationsgerät in eine Ladestation gesteckt wird, die über ein Kabel mit dem Stromnetz verbunden ist, um den Akkumulator des Lichtpolymerisationsgeräts aufzuladen. Beim Einstecken des Lichtpolymerisationsgeräts in die Ladestation werden elektrische Ladekontakte des Lichtpolymerisationsgeräts und der Ladestation miteinander verbunden.

Ladekontakte für Li-Ionen-Akkus sind üblicherweise für kleine Spannungen (<10 V DC) und kleine Ströme (<1 A, DC) ausgelegt, woraus ein hochqualitatives Kontaktdesign resultiert. Hierfür sind Pin-, Federhebel- und Schleifkontakte bekannt. Ladekontakte unterliegen bei intensiver Nutzung und Alterung einem natürlichem Verschleiß beziehungsweise einer durch die Anwendung resultierenden Verschmutzung. Durch geeignetes Design und Materialwahl, wie zum Beispiel einer Goldbeschichtung der Ladekontakte, kann der Verschleiß reduziert aber nicht verhindert werden. Ebenso sind anwenderseitige Reinigungsversuche nicht zielführend, da hierbei der Ladekontakt beziehungsweise dessen Oberfläche beschädigt werden kann. Bisher werden in Ladestationen für Lichtpolymerisationsgeräte fest installierte Ladekontakte, Kontakt-Paare oder Leisten verwendet, welche bei Verschleiß oder Defekt die Ladefunktion unterbinden und die gesamte Ladestation oder das Lichtpolymerisationsgerät damit unbrauchbar machen.

WO 2009/137433 A2 zeigt eine Ladestation und Details der Kontakte zwischen zu ladendem Gerät und Ladestation.

Nachteilig ist hieran also, dass die elektrischen Ladekontakte verschleißen, über die der Akkumulator aufgeladen wird, und daher die Lebensdauer der Ladestationen und Lichtpolymerisationsgeräte begrenzt ist oder zumindest eine Reparatur von Teilen der Geräte erforderlich ist.

Die Aufgabe der Erfindung besteht also darin, die Nachteile des Stands der Technik zu überwinden. Insbesondere soll eine Möglichkeit gefunden werden, den Aufwand zu reduzieren, der dadurch entsteht, dass die Ladekontakte verschleißen. Dabei soll insbesondere der Kostenaufwand reduziert werden, der durch die Reparatur der Ladekontakte entsteht.

Die Aufgabe der Erfindung wird gelöst durch eine Ladestation für ein kabelloses Lichtpolymerisationsgerät entsprechend unabhängigem Anspruch 1.

Unter einem kabellosen Lichtpolymerisationsgerät ist erfindungsgemäß kein Gerät zu verstehen, dessen Aufbau völlig frei von Kabeln ist, sondern, dass das Gerät zur Stromversorgung nicht mit einem Kabel an einer externen Spannungsquelle, wie beispielsweise einer Steckdose angeschlossen ist. Vorzugsweise ist das kabellose Lichtpolymerisationsgerät handführbar. Das Gerät kann dann einfach mit einer Hand eingesetzt werden. Unter einem Ladekontakt des Aufsatzes wird sowohl der Teil verstanden, der durch Berührung mit einem Gegenkontakt eine elektrische Verbindung bereitstellt, als auch die Verbindung in dem Aufsatz von einem zum nächsten Berührungspunkt.

Bei erfindungsgemäßen Ladestationen kann vorgesehen sein, dass die elektrisch leitende Verbindung eine Steckverbindung ist.

Steckverbindungen sind einfach und kostengünstig realisierbar und lassen sich leicht bedienen. Ferner kann vorgesehen sein, dass der Aufsatz ein Befestigungselement umfasst, mit dem der Aufsatz an der Ladestation befestigbar oder befestigt ist, wobei vorzugsweise das Befestigungselement ein Gewinde ist, das in ein Gegengewinde der Ladestation greift, und/oder das Befestigungselement zumindest eine Schraube ist, mit der der Aufsatz an die Ladestation schraubbar oder geschraubt ist.

Durch diese Befestigungselemente lässt sich eine stabile Verbindung des Aufsatzes mit der Ladestation herstellen, die auch den mechanischen Belastungen eines Einsteckvorgangs standhält.

Gemäß einer weiteren Ausführungsform der Erfindung kann vorgesehen sein, dass der Aufsatz mit der Ladestation arretierbar oder arretiert ist und/oder der Aufsatz mit der Ladestation einen Bajonettverschluss bildet.

Diese Befestigungen lassen sich leicht und schnell verbinden und bieten daher einen verbesserten Bedienkomfort.

Gemäß einer weiteren besonders vorteilhaften Ausgestaltung der Erfindung kann vorgesehen sein, dass zumindest ein Ladekontakt, vorzugsweise der elektrisch leitende Ladekontakt des

Aufsatzes zumindest bereichsweise eine Beschichtung umfasst, vorzugsweise eine Veredelung, besonders bevorzugt eine Edelmetallbeschichtung, und/oder der Aufsatz zwei Ladekontaktstifte oder eine USB-Schnittstelle umfasst, die den Ladekontakt beinhalten.

Durch diesen Aufbau wird eine stabile und sichere elektrische Kontaktierung erreicht. Hierbei müssen natürlich nur die Teile des Ladekontakts beschichtet sein, die eine Oberfläche umfassen, die mit einem Gegenkontakt in Berührung kommen kann. Die Verkabelung im Inneren des Aufsatzes ist nicht beschichtet.

Die Aufgaben der Erfindung werden auch gelöst durch ein kabelloses Lichtpolymerisationsgerät zum Aushärten von lichtpolymerisierbaren Dentalmaterialien, wobei das Lichtpolymerisationsgerät einen Speicher für elektrischen Strom, insbesondere einen Akkumulator oder einen Kondensator umfasst und wobei das Lichtpolymerisationsgerät wenigstens einen elektrisch leitenden Ladekontakt umfasst, über den eine elektrisch leitende Verbindung mit einem elektrisch leitenden Gegenladekontakt einer Ladestation für das Lichtpolymerisationsgerät zum Aufladen des Speichers herstellbar ist, wenn das Lichtpolymerisationsgerät an die Ladestation angeschlossen ist, bei dem der elektrisch leitende Ladekontakt Teil eines Aufsatzes ist, der lösbar an dem Lichtpolymerisationsgerät befestigbar oder befestigt ist, wobei der elektrisch leitende Ladekontakt im Aufsatz elektrisch leitend mit wenigstens einem zweiten elektrisch leitenden Ladekontakt in dem Lichtpolymerisationsgerät verbunden ist, wenn der Aufsatz an dem Lichtpolymerisationsgerät befestigt ist.

Dabei kann vorgesehen sein, dass die elektrisch leitende Verbindung eine Steckverbindung ist.

Ferner kann vorgesehen sein, dass der Aufsatz ein Befestigungselement umfasst, mit dem der Aufsatz an dem Lichtpolymerisationsgerät befestigbar oder befestigt ist, wobei vorzugsweise das Befestigungselement ein Gewinde ist, das in ein Gegengewinde des Lichtpolymerisationsgeräts greift, und/oder das Befestigungselement zumindest eine Schraube ist, mit der der Aufsatz an das Lichtpolymerisationsgerät schraubbar oder geschraubt ist.

Gemäß einer weiteren besonders bevorzugten Ausführungsform der Erfindung kann vorgesehen sein, dass der Aufsatz mit dem Lichtpolymerisationsgerät arretierbar oder arretiert ist und/oder der Aufsatz mit dem Lichtpolymerisationsgerät einen Bajonettverschluss bildet.

Die Vorteile dieser letzten Ausführungsformen sind die gleiche, wie die, die zum Aufsatz für das Ladegerät beschrieben wurden.

Ferner kann vorgesehen sein, dass das Lichtpolymerisationsgerät eine Lichtquelle, vorzugsweise eine LED zum Aushärten eines polymerisierbaren Kunststoffs umfasst, die vorzugsweise Licht mit einer Wellenlänge zwischen 380 nm bis 500 nm abstrahlt, besonders bevorzugt umfassend zumindest zwei Wellenlängenspitzen, ganz besonders bevorzugt zwischen 400 nm und 405 nm und 455 nm und 460 nm.

Diese Wellenlängen sind besonders gut geeignet, um eine Lichtpolymerisation zu erreichen. Insbesondere für Dentalkunststoffe sind diese Wellenlängen besonders gut geeignet.

Es kann erfindungsgemäß auch vorgesehen sein, dass die LED-Lichtquelle in einem Leistungsbereich von 800 mW/cm² bis 2000 mW/cm² abstrahlt, vorzugsweise zwischen 1200 mW/cm² und 1800 mW/cm².

Auch kann vorgesehen sein, dass das Lichtpolymerisationsgerät eine Ladekontrollelektronik umfasst, mit der die Ladung des Stromspeichers gesteuert oder geregelt wird.

Die Integration der Ladekontrollelektronik (Steuerung) in das Handstück, das heißt, in das Lichtpolymerisationsgerät, hat den Vorteil, dass ein kompakter Aufbau gewährleistet ist und die Ladekontrollelektronik unmittelbar auf den Akkumulator oder den Speicher für elektrische Energie zugreifen kann.

Bei erfindungsgemäßen Lichtpolymerisationsgeräten kann auch vorgesehen sein, dass zumindest ein Ladekontakt, vorzugsweise der elektrisch leitende Ladekontakt des Aufsatzes zumindest bereichsweise eine Beschichtung umfasst, vorzugsweise eine Veredelung, besonders bevorzugt eine Edelmetallbeschichtung, und/oder der Aufsatz zwei Ladekontaktstifte oder eine USB-Schnittstelle umfasst, die den Ladekontakt beinhalten.

Die Aufgaben der Erfindung werden auch gelöst durch einen Aufsatz zur Verbindung eines kabellosen Lichtpolymerisationsgeräts mit einer Ladestation, wobei der Aufsatz zum Befestigen an einer solchen Ladestation und/oder an einem solchen Lichtpolymerisationsgerät geeignet ist.

Eine weitere Lösung der Aufgaben der Erfindung kann realisiert werden durch einen Lichtpolymerisationsapparat umfassend eine Ladestation, insbesondere eine erfindungsgemäße Ladestation, ein handführbares Lichtpolymerisationsgerät, insbesondere ein erfindungsgemäßes Lichtpolymerisationsgerät, wobei das Lichtpolymerisationsgerät wenigstens einen Speicher für elektrischen Strom, vorzugsweise einen Akkumulator, umfasst und das Lichtpolymerisationsgerät zumindest einen Aufsatz mit einem Ladekontakt umfasst und wobei der Aufsatz oder die Aufsätze an der Ladestation und/oder der Aufsatz oder die Aufsätze an dem Lichtpolymerisationsgerät befestigbar oder befestigt ist oder sind, wobei der Aufsatz oder die Aufsätze zumindest eine elektrisch leitende Verbindung bereitstellt oder bereitstellen, über die der Speicher für elektrischen Strom aufladbar ist.

Bei allen Ausführungsformen der Erfindung mit einem Akkumulator im Lichtpolymerisationsgerät kann vorgesehen sein, dass der Akkumulator ein Li-Ionen-Akkumulator ist.

Der Erfindung liegt die überraschende Erkenntnis zugrunde, dass es durch einen austauschbaren Aufsatz, in dem der Ladekontakt integriert ist, gelingt, ein Lichtpolymerisationsgerät oder eine Ladestation für ein solches Lichtpolymerisationsgerät bereitzustellen, bei dem durch einen einfachen Tausch des Aufsatzes eine Erneuerung des Ladekontakts erreicht wird. Dadurch, dass das Verschleißteil, nämlich der Ladekontakt, in einem leicht tauschbaren der Aufsatz integriert ist, kann eine aufwendige Reparatur des Lichtpolymerisationsgeräts beziehungsweise der Ladestation für das Lichtpolymerisationsgerät vermieden werden.

Der Erfindung liegt also der überraschende Gedanken zugrunde, den eigentlichen Ladekontakt (Bügel, Pin, Lasche, Feder, etc.) in zwei nacheinander angeordnete Kontakte aufzuteilen und den verschleißenden Arbeitskontakt (Ladestation gegenüber Lichtpolymerisationsgerät / Handstück) mittels eines montierbaren Aufsatzes (Adapters oder Einsatzes) auch für ungeschulte Anwender einfach zu ermöglichen. Die so gebildeten Kaskadenkontakte haben somit eine erhöhte Lebensdauer und können bei Bedarf beliebig oft vom Anwender des Lichtpolymerisationsgeräts gewechselt werden.

Ladekontakte nach dem Stand der Technik sind fest mit der Ladestation oder dem Lichtpolymerisationsgerät beziehungsweise der Elektronik derselben verbunden, wodurch bei solchen Ladestationen und Lichtpolymerisationsgeräten bei Defekt ein Austausch oder eine Reparatur durch den Hersteller oder einen Servicemitarbeiter notwendig wird. Bezogen auf den Materialpreis der Kontakte gegenüber dem resultierenden Aufwand ist dies gegenüber erfindungsgemäßen Ladestationen und Lichtpolymerisationsgeräten ein unwirtschaftliches Vorgehen.

Ein Beispiel für einen erfindungsgemäßen Aufbau ist ein Lichtpolymerisationsapparat für dentale Restaurationsmaterialien umfassend ein Lichtpolymerisationsgerät als Handstück mit einer LED-Lichtquelle, wobei die LED-Lichtquelle in einem einfach- oder mehrfach-Wellenlängenbereiche von 380 nm bis 500 nm, insbesondere mit mindestens zwei Wellenlängenpeaks, vorzugsweise in zwei Wellenlängenbereichen von 400 nm bis 405 nm und 455 nm bis 460 nm, wobei die LED-Lichtquelle in einem Leistungsbereich von 800 mW/cm² bis 2000 mW/cm² abstrahlt, vorzugsweise zwischen 1200 mW/cm² und 1800 mW/cm², und das Lichtpolymerisationsgerät einen austauschbaren und wiederaufladbarem Akkumulator, vorzugsweise Li-Ionen-Akkumulator, im Handstück umfasst, welcher durch eine separate Basisstation oder Ladestation des Lichtpolymerisationsapparats mit elektrischer Spannung aufladbar und/oder mit Spannung beaufschlagbar ist, wobei
das Lichtpolymerisationsgerät mit mindestens zwei Ladekontaktteilen im Handstück und/oder der Ladestation als Kaskadenkontakte ausgeführt sind,
die Arbeitskontakte in einen Aufsatz, wie beispielsweise einem Adapter oder einem Einsatz integriert sind, welcher durch einfache Tätigkeiten vom Kunden austauschbar ist,
die Spannungsversorgung der Ladestation über USB-Schnittstellen erfolgt und
eine Ladekontroll-Elektronik, die sich vollständig im Handstück befindet.

Der Kaskadenkontakt ist nach Art einer Reihenschaltung realisiert, wobei die Ladekontakte in Reihe geschaltet sind.

Die vorliegende Erfindung ersetzt den "Verschleiß-Ladekontakt" in ein eigenes integriertes aber leicht entnehmbares Teilgehäuse (den Aufsatz), welches seinerseits mit gleichen oder andersartigen Ladekontakten mit dem eigentlichen Ladegehäuse verbunden ist.

Im Folgenden werden weitere Ausführungsbeispiele der Erfindung anhand von vier schematisch dargestellten Figuren erläutert, ohne jedoch dabei die Erfindung zu beschränken. Dabei zeigt:
- Figur 1:: eine schematische Querschnittansicht eines erfindungsgemäßen Lichtpolymerisationsapparats umfassend ein Lichtpolymerisationsgerät, eine Ladestation und einen Aufsatz;
- Figur 2:: eine schematische Querschnittansicht einer besonders bevorzugten Ausführungsform eines erfindungsgemäßen Aufsatzes eingesetzt in eine Ladestation mit eingesetztem Lichtpolymerisationsgerät;
- Figur 3:: eine schematische perspektivische Ansicht auf eine erfindungsgemäße Ladestation mit einem nicht befestigten erfindungsgemäßen Aufsatz; und
- Figur 4:: eine schematische perspektivische Ansicht auf die Unterseite der erfindungsgemäßen Ladestation nach Figur 3 mit einem zum Einsetzen bereiten erfindungsgemäßen Aufsatz.

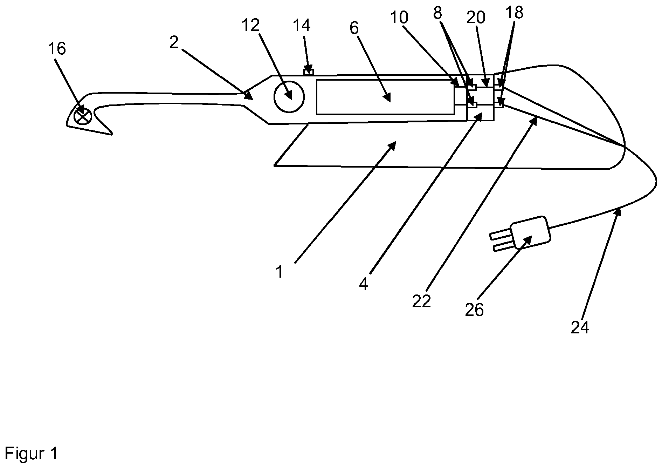

Figur 1 zeigt eine schematische Querschnittansicht eines erfindungsgemäßen Lichtpolymerisationsapparats umfassend eine an ein Stromnetz angeschlossene Ladestation 1, ein handführbares Lichtpolymerisationsgerät 2 und einen Aufsatz 4. Das Lichtpolymerisationsgerät 2 (Handstück) umfasst in seinem Gehäuse im Bereich eines Griffkörpers, der zum Halten in einer Hand ausgelegt ist, einen austauschbaren Akkumulator 6. Bei dem Akkumulator handelt es sich bevorzugt um einen Li-Ionen-Akkumulator. Am bodenseitigen Ende des Lichtpolymerisationsgeräts 2 ist ein erster elektrischer Ladekontakt 8 angeordnet, der zwei Metallstifte umfasst und so nach Art eines Steckers ausgebildet ist. Der Ladekontakt 8 ist über zwei elektrische Leitungen 10 mit dem Akkumulator 6 verbunden, so dass beim Anlegen einer elektrischen Spannung an den Metallstiften des elektrischen Ladekontakts 8 der Akkumulator 6 aufgeladen werden kann.

Im Inneren des Griffs des Lichtpolymerisationsgeräts 2 ist auch eine Steuerung 12 angeordnet, die unter anderem zur Steuerung des Ladevorgangs des Akkumulators 6 vorgesehen ist. Zudem ist die Steuerung 12 zur Verarbeitung von Signalen einer Eingabeeinrichtung 14 geeignet, bei der es sich auch um einen einfachen Schalter oder einen Drehregler handeln kann. Mit der Eingabeeinrichtung 14 kann das Lichtpolymerisationsgerät 2 zumindest ein- und ausgeschaltet werden, wobei vorzugsweise auch die Leistung des abgestrahlten Lichts und/oder die Zeitdauer der Beleuchtung einstellbar ist. Mit der Steuerung 12 kann auch eine Anzeigeeinrichtung (nicht gezeigt), wie beispielsweise eine oder mehrere LED, gesteuert werden, so dass der Anwender ablesen kann, ob das Lichtpolymerisationsgerät 2 gerade geladen wird und/oder ob das Lichtpolymerisationsgerät 2 vollständig geladen ist. Die Steuerung 12 verarbeitet zudem die Signale der Eingabeeinrichtung 14 und steuert auf deren Grundlage eine LED 16, mit der weißes oder blaues Licht abgestrahlt werden kann, das zum Aushärten eines polymerisierbaren Kunststoffs geeignet ist.

Das Lichtpolymerisationsgerät 2 steckt mit den Metallstiften in dem Aufsatz 4, der dazu an den entsprechenden Stellen zwei metallausgekleidete Ausnehmungen für die Metallstifte der ersten Ladekontakte 8 umfasst. Die Ausnehmungen in dem Aufsatz können federnde, elastische Metallbügel umfassen, so dass ein Federkontakt gebildet wird. Die Ausnehmungen sind über elektrische Leitungen 20 in dem Aufsatz 4 mit einem elektrischen Ladekontakt 18 des Aufsatzes 4 verbunden, der zwei Metallstifte umfasst. Die federnden, elastischen Metallbügel gehören ebenfalls zum Ladekontakt 18 des Aufsatzes. Der Aufsatz 4 bildet also einen Kaskadenstecker.

Der Aufsatz 4 steckt mit den Metallstiften des zweiten Ladekontakts 18 in elektrisch leitenden Ausnehmungen der Ladestation 1 und ist über ein Gewinde (nicht gezeigt) an einem Gegengewinde der Ladestation 1 (nicht gezeigt) befestigt. Die Ladestation 1 ist im Wesentlichen ein Standfuß, der ein stabiles Aufstellen der Ladestation 1 ermöglicht. Ebenso kann die Ladestation 1 aber auch mit einer Halterung an einer Wand oder einer Stange befestigt sein oder werden. Zwei elektrische Leitungen 22, die im Inneren der Ladestation 1 verlaufen, verbinden die Ausnehmungen der Ladestation 1 elektrisch leitend mit einem Netzkabel 24, das in einen Netzstecker 26 mündet, mit dem die Ladestation 1 an eine Steckdose für ein gewöhnliches Stromnetz anschließbar ist. Gegebenenfalls kann in der Ladestation 1, dem Netzkabel 24 oder dem Netzstecker 26 ein Transformator (nicht gezeigt) vorgesehen sein.

Wenn das Lichtpolymerisationsgerät 2 über den Aufsatz 4 mit der Ladestation 1 verbunden ist, wird der Akkumulator 6, gesteuert durch die Steuerung 12, aufgeladen. Wenn die metallisierten Ausnehmungen im Aufsatz 4 durch häufigen Gebrauch abgenutzt sind, kann der Aufsatz 4 von der Ladestation 1 abgeschraubt werden und einfach durch einen neuen Aufsatz 4 mit intakten Ausnehmungen und ersetzt werden. Wegen der leichten Austauschbarkeit des Aufsatzes 4 kann besonders vorteilhaft vorgesehen sein, dass die Metalle und/oder die Beschichtung der Ausnehmungen des Aufsatzes 4 weniger hart sind, als die Metallstifte des Ladekontakts 8 des Lichtpolymerisationsgeräts 2, damit sich der Ladekontakt 8 nur langsam abnutzt und die Abnutzungserscheinungen vor allem an den Ausnehmungen des austauschbaren Aufsatzes 4 auftreten.

Alternativ zu der gezeigten Ausführungsform könnte der Aufsatz 4 auch fest mit dem Lichtpolymerisationsgerät 2 verbunden sein. Hierdurch wird allerdings das Gewicht des Lichtpolymerisationsgeräts 2, das in der Hand gehalten wird, erhöht. Daher ist die Befestigung des Aufsatzes 4 an der Ladestation 1 bevorzugt, um das Gewicht des handgeführten Lichtpolymerisationsgeräts 2 möglichst gering zu halten.

Es könnte ferner auch vorgesehen sein, sowohl am Lichtpolymerisationsgerät 2 als auch an der Ladestation 1 jeweils einen Aufsatz 4 zu befestigen. Die Abnutzung der Ladekontakte erfolgt dann nur in den Ausnehmungen des ersten Aufsatzes 4 an der Ladestation 1 und den Ladekontakten (Metallstiften) des zweiten Aufsatzes (nicht gezeigt). Durch diesen Aufbau kann eine Abnutzung der Ladekontakte des Lichtpolymerisationsgeräts 2 und der Ladestation 1 konsequent verhindert werden. Diese Ausführung ist als generelles Prinzip für alle erfindungsgemäßen Ausführungsformen besonders bevorzugt und nicht nur auf das vorliegende Ausführungsbeispiel beschränkt.

Um einen guten elektrischen Kontakt zu gewährleisten, können die Ausnehmungen und die Metallstifte mit einer Metallschicht veredelt sein, die eine Oxidation der Oberflächen der Kontakte verhindert. Die Oxidation würde zu einer Verschlechterung des elektrischen Kontakts führen. Dabei müssen keine kostspieligen Goldbeschichtungen oder ähnlich kostenintensive Edelmetallbeschichtungen verwendet werden, da die Langlebigkeit der Ausnehmungen und Ladekontakte 18 der Aufsätze 4 nicht wesentlich ist. Auch dies ist als bevorzugtes generelles erfindungsgemäßes Prinzip zu verstehen und nicht auf das vorliegende Ausführungsbeispiel beschränkt.

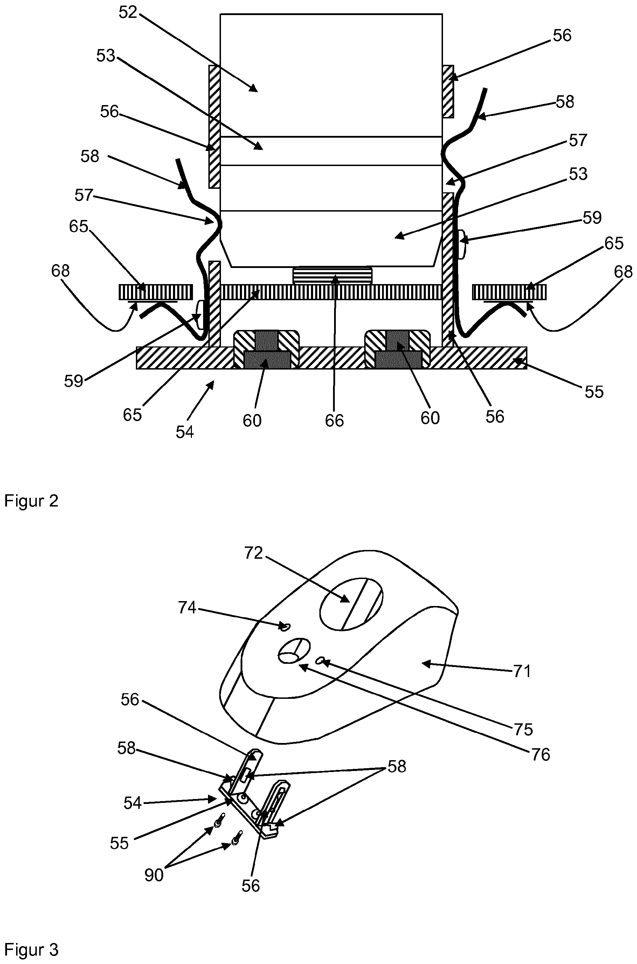

Figur 2 zeigt eine schematische Querschnittansicht einer besonders bevorzugten Ausführungsform eines erfindungsgemäßen Aufsatzes 54 eingesetzt in eine Ladestation (von der in Figur 2 nur eine Platine 65 gezeigt ist) mit eingesetztem Lichtpolymerisationsgerät 52, von dem nur der untere Teil in Figur 2 zu sehen ist. Das Lichtpolymerisationsgerät 52 umfasst zwei metallische Ringkontakte 53 als Ladekontakte, die voneinander elektrisch isoliert sind und die mit einem Akkumulator (nicht gezeigt) im Inneren des Lichtpolymerisationsgeräts 52 verbunden sind. Der Akkumulator kann durch Anlegen einer elektrischen Spannung, die durch eine Steuerung (nicht gezeigt) des Lichtpolymerisationsgeräts 52 geregelt sein kann beziehungsweise regelbar ist, über die Ringkontakte 53 aufgeladen werden.

Der Aufsatz 54 umfasst einen Steg 55 und zwei Ladekontaktstifte 56 aus Kunststoff. Die Kunststoffteile können mit einem Spritzgießverfahren hergestellt werden. In den Ladekontaktstiften 56 ist jeweils eine Ausnehmung 57 vorgesehen, durch die sich zwei Ladekontakte 58 des Aufsatzes 54 hindurch erstrecken und so einen elektrischen Kontakt mit den Ringkontakten 53 des eingesetzten Lichtpolymerisationsgeräts 52 herstellen. Die Ladekontakte 58 sind schmale, gebogene, vorgespannte Metallbänder (Ladekontaktfedern), die mit einer Fixierung 59 an den Ladekontaktstiften 56 befestigt sind. Die Fixierung 59 kann durch Schrauben oder Nieten realisiert sein. Grundsätzlich ist auch eine feste Klebung vorstellbar.

In dem Steg 55 sind zwei verstärkte Ausnehmungen 60 als Schraubenlöcher 60 vorgesehen. Durch diese Schraubenlöcher 60 kann der Aufsatz 54 mit der Ladestation fest verbunden werden. Dazu umfasst die Ladestation zwei passende Ausnehmungen mit Innengewinden (nicht gezeigt). Die Ladekontaktstifte 56 mit den Ladekontakten 58 greifen durch zwei Ausnehmungen einer Platine 65 der Ladestation. An der Platine 65 ist ein Abstandhalter 66 vorgesehen, der für die richtige Position des vollständig einsteckten Lichtpolymerisationsgeräts 52 sorgt, in dem er einen Endanschlag definiert.

Auf der Platine 65 sind zwei metallische Kontaktflächen 68 als Ladekontakte der Ladestation vorgesehen. Die Platine 65, der Abstandhalter 66 und die Kontaktflächen 68 sind Teil der Ladestation und mit dieser fest und starr verbunden. Wenn der Aufsatz 54 an der Ladestation befestigt ist, drückt jeweils ein Ende der metallischen Blattfeder 58 auf die Kontaktflächen 68 und stellt so eine elektrisch leitende Verbindung zwischen dem Ladekontakt 58 des Aufsatzes 54 und den an den Kontaktflächen 68 angeschlossenen elektrischen Leitungen der Ladestation her. Wenn das Lichtpolymerisationsgerät 52 in eine dafür vorgesehene Ausnehmung (nicht gezeigt) in der Ladestation gesteckt wird, drücken die jeweils anderen Enden der Ladekontaktfeder 58, beziehungsweise eine Wölbung der Ladekontaktfeder 58 auf der anderen Seite der Fixierung 59, auf die Ringkontakte 53 des Lichtpolymerisationsgeräts 52 und stellen so eine elektrische Verbindung zwischen den Ringkontakten 53 und den Kontaktflächen 68 über den Ladekontakt 58 her.

Die Kontaktflächen 68 sind mit einem Stromnetz oder einer anderen Spannungsquelle verbunden, indem die Ladestation über die elektrischen Leitungen und ein Kabel sowie einen Netzstecker mit einer Steckdose verbunden ist.

Figur 3 zeigt eine schematische perspektivische Ansicht auf eine erfindungsgemäße Ladestation 71 mit einem nicht befestigten erfindungsgemäßen Aufsatz 54. Der Aufsatz 54 ist aufgebaut, wie der in Figur 2 gezeigte Aufsatz 54. Der Aufsatz 54 umfasst einen Steg 55 als Basis, in dem zwei Durchführungen für zwei Schrauben 90 vorgesehen sind, mit denen der Aufsatz 54 im Boden der Ladestation 71 von unten befestigt werden kann.

Zwei Ladekontaktstifte 56, die die Ladekontaktfedern 58 beziehungsweise den Ladekontakt 58 des Aufsatzes 54 tragen, sind in einem rechten Winkel zum Steg 55 angeordnet. Der Steg 55 und die Ladekontaktstifte 56 werden einteilig aus Kunststoff hergestellt. Der Aufsatz 54 wird von unten in die Ladestation 71 im Bereich einer Ausnehmungen 72 zum Einstecken eines Lichtpolymerisationsgeräts (nicht gezeigt) eingesteckt und dort mit den Schrauben 90 befestigt. Die gezeichneten Linien in der Ausnehmung 72 und an der Vorderseite der Ladestation 71 sollen lediglich perspektivisch die Ausrichtung der Wandungen andeuten und haben hier keine weitere Bedeutung. Ebenso könnten in diesem Bereich aber auch eine Schiene vorgesehen sein, die das Einstecken eines Lichtpolymerisationsgeräts / Handstücks nur in einer Ausrichtung erlaubt. Die Ausnehmung 72 hat einen runden Querschnitt.

Die Ladestation 71 umfasst eine lichtemittierende Diode (= LED) 74, die zum Anzeigen des Ladezustands eines Energiespeichers eines eingesetzten Lichtpolymerisationsgeräts dienen. Zusätzlich oder alternative dient die LED 74 als Anzeige für eine angeschlossene Spannungsversorgung über ein Netzanschlusskabel 78. Die LED 75 dient als Anzeige der mit einem Sensor 76 gemessenen Lichtintensität.

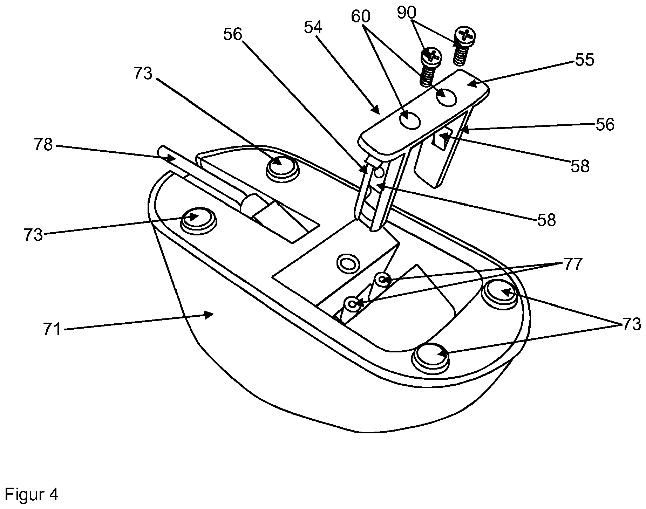

Figur 4 zeigt eine schematische perspektivische Ansicht auf die Unterseite der erfindungsgemäßen Ladestation 71 nach Figur 3 mit einem zum Einsetzen bereiten erfindungsgemäßen Aufsatz 54. Wie in Figur 4 zu erkennen ist, wird der Aufsatz 54 in eine passende Ausnehmung an der Unterseite der Ladestation 71 eingesteckt. Man könnte den Aufsatz 54 also auch als Einsatz 54 bezeichnen. Die Ladekontaktstifte 56 reichen durch eine Platine (nicht gezeigt), die die Ladekontakte in Form zweier Kontaktflächen (nicht gezeigt) der Ladestation 71 trägt, wie dies in Figur 2 gezeigt ist, und erstrecken sich bis in die Ausnehmung 72 (die in Figur 3 zu erkennen ist). Dort können die Blattfedern der Ladekontakte 58 mit Gegenkontakten eines Lichtpolymerisationsgeräts in Verbindung gebracht werden, in dem das Lichtpolymerisationsgerät in die Ausnehmung 72 gesteckt wird. Die Kontaktflächen der Ladestation werden ebenso durch die anderen Enden der Blattfedern der Ladekontakte 58 kontaktiert. Die Kontaktflächen sind über ein Netzanschlusskabel - auch Stromkabel - 78 mit einer Spannungsquelle verbunden.

Der Aufsatz / Einsatz 54 wird mit den Schrauben 90, die durch die Schraubenlöcher 60 geführt werden, in den Gewindebohrungen 77, die ein Gegengewinde für die Schrauben 90 umfassen, befestigt.

Auf der Unterseite der Ladestation 71 sind vier gummierte Standfüße 73 angeordnet, die für einen sicheren Stand der Ladestation 71 auch beim Einsetzen und Entnehmen des Lichtpolymerisationsgeräts sorgen.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1, 71: Ladestation
- 2, 52: Lichtpolymerisationsgerät
- 4, 54: Aufsatz / Einsatz
- 6: Akkumulator
- 8, 18: Ladekontakt
- 10, 20, 22: Elektrische Leitung
- 12: Steuerung
- 14: Eingabeeinrichtung / Schalter / Drehregler
- 16: LED für Lichtpolymerisation
- 24,78: Kabel oder Netzanschlusskabel
- 26: Stecker
- 53: Ringkontakt
- 55: Steg
- 56: Ladekontaktstift
- 57: Ausnehmung
- 58: Ladekontaktfeder / Blattfeder
- 59: Fixierung
- 60: Schraubenloch
- 65: Platine
- 66: Abstandhalter
- 68: Kontaktfläche
- 72: Aufnahme für Lichtpolymerisationsgerät / Handgerät
- 73: Standfuß
- 74: LED zur Anzeige einer angeschlossene Spannungsversorgung
- 75: Anzeige der mit einem Sensor 76 gemessenen Lichtintensität
- 76: Sensor
- 77: Gewindebohrung
- 78,24: Netzanschlusskabel oder Kabel
- 90: Schraube

## Patentansprüche

1. Ladestation (71) für ein kabelloses Lichtpolymerisationsgerät (2, 52) zum Aushärten von lichtpolymerisierbaren Dentalmaterialien, wobei das Lichtpolymerisationsgerät (2, 52) einen Speicher (6) für elektrischen Strom, insbesondere einen Akkumulator (6) oder einen Kondensator umfasst und wobei die Ladestation (71) einen Aufsatz (54) und wenigstens einen elektrisch leitenden Ladekontakt (58) umfasst, über den eine elektrisch leitende Verbindung mit einem elektrisch leitenden Gegenladekontakt (8, 53) des Lichtpolymerisationsgeräts (2, 52) zum Aufladen des Speichers (6) realisiert ist, wenn das Lichtpolymerisationsgerät (2, 52) an die Ladestation (71) angeschlossen ist, **dadurch gekennzeichnet, dass**
der elektrisch leitende Ladekontakt (58) Teil des Aufsatzes (54) ist, wobei der Aufsatz (54) lösbar an der Ladestation (71) befestigbar oder befestigt ist, wobei der elektrisch leitende Ladekontakt (58) im Aufsatz (54) elektrisch leitend mit wenigstens einem zweiten elektrisch leitenden Ladekontakt (68) der Ladestation (71) verbunden ist, wenn der Aufsatz (54) an der Ladestation (71) befestigt ist, wobei der Aufsatz (54) ein Befestigungselement (90) umfasst, mit dem der Aufsatz an der Ladestation (71) befestigbar oder befestigt ist, wobei das Befestigungselement ein Gewinde ist, das in ein Gegengewinde der Ladestation (71) greift, und/oder das Befestigungselement (90) zumindest eine Schraube (90) ist, mit der der Aufsatz (54) an die Ladestation (71) schraubbar oder geschraubt ist, wobei der Aufsatz (54) einen Steg (55) und zwei Ladekontaktstifte (56) aus Kunststoff, in denen jeweils mindestens eine Ausnehmung (57) vorgesehen ist, durch die sich der elektrisch leitende Ladekontakt (58) des Aufsatzes (54) erstreckt, umfasst, und wobei die Ladekontaktstifte (56) mit dem elektrisch leitenden Ladekontakt (58) durch Ausnehmungen einer Platine (65) der Ladestation (71) greifen und der elektrisch leitende Ladekontakt (58) elektrisch leitend mit dem auf der Platine (65) vorgesehenen zweiten elektrisch leitenden Ladekontakt (68) der Ladestation (71) verbunden ist.

2. Ladestation (71) nach Anspruch 1, **dadurch gekennzeichnet, dass** die elektrisch leitende Verbindung eine Steckverbindung ist.

3. Ladestation (71) nach einem der vorangehenden Ansprüche, **dadurch gekennzeichnet, dass**
zumindest ein Ladekontakt (58, 68), vorzugsweise der elektrisch leitende Ladekontakt (58) des Aufsatzes (54) zumindest bereichsweise eine Beschichtung umfasst, vorzugsweise eine Veredelung, besonders bevorzugt eine Edelmetallbeschichtung, und/oder der Aufsatz zwei Ladekontaktstifte (56) oder eine USB-Schnittstelle umfasst, die den Ladekontakt (58) beinhalten.

4. Aufsatz (54) zur Verbindung eines kabellosen Lichtpolymerisationsgeräts (2, 52) mit einer Ladestation (71), wobei der Aufsatz (54) zum Befestigen an einer Ladestation (71) nach einem der Ansprüche 1 bis 3 verwendet wird, wobei der Aufsatz (54) ein Befestigungselement (90) umfasst, mit dem der Aufsatz an der Ladestation (71) befestigbar oder befestigt ist, wobei vorzugsweise das Befestigungselement ein Gewinde ist, das in ein Gegengewinde der Ladestation (71) greift, und/oder das Befestigungselement (90) zumindest eine Schraube (90) ist, mit der der Aufsatz (54) an die Ladestation (71) schraubbar oder geschraubt ist, wobei der Aufsatz (54) einen Steg (55) und zwei Ladekontaktstifte (56) aus Kunststoff, in denen jeweils mindestens eine Ausnehmung (57) vorgesehen ist, durch die sich der elektrisch leitende Ladekontakt (58) des Aufsatzes (54) erstreckt, umfasst, und wobei der wenigstens eine elektrisch leitende Ladekontakt (58) durch Ausnehmungen einer Platine (65) der Ladestation (71) greift und elektrisch leitend mit dem auf der Platine (65) vorgesehenen zweiten elektrisch leitenden Ladekontakt (68) der Ladestation (71) verbunden ist.

5. Lichtpolymerisationsapparat umfassend eine Ladestation (71) nach einem der Ansprüche 1 bis 3, ein handführbares Lichtpolymerisationsgerät (2, 52), wobei das Lichtpolymerisationsgerät (2, 52) wenigstens einen Speicher (6) für elektrischen Strom, vorzugsweise einen Akkumulator (6), umfasst und das Lichtpolymerisationsgerät (2, 52) zumindest einen Aufsatz (4) mit einem Ladekontakt (8, 18, 53) umfasst und, wobei der Aufsatz (54) an der Ladestation (71) befestigbar oder befestigt ist oder sind, wobei der Aufsatz (4, 54) oder die Aufsätze (4, 54) zumindest eine elektrisch leitende Verbindung (18, 20, 58) bereitstellt oder bereitstellen, über die der Speicher (6) für elektrischen Strom aufladbar ist, wobei der Aufsatz (54) ein Befestigungselement (90) umfasst, mit dem der Aufsatz an der Ladestation (71) befestigbar oder befestigt ist, wobei vorzugsweise das Befestigungselement ein Gewinde ist, das in ein Gegengewinde der Ladestation (71) greift, und/oder das Befestigungselement (90) zumindest eine Schraube (90) ist, mit der der Aufsatz (54) an die Ladestation (71) schraubbar oder geschraubt ist.

## Claims

1. Charging station (71) for a wireless photopolymerization device (2, 52) for curing of light-polymerizable dental materials, the photopolymerization device (2, 52) comprising a reservoir (6) for electrical power, in particular an accumulator (6) or a capacitor, and the charging station (71) comprising an attachment (54) and at least one electrically conductive charging contact (58) by means of which an electrically conductive connection to an electrically conductive mating charging contact (8, 53) of the photopolymerization device (2, 52) is realized for charging the reservoir (6), when the photopolymerization device (2, 52) is connected to the charging station (71), **characterised in that**
the electrically conductive charging contact (58) is part of the attachment (54), the attachment (54) being fastenable or being fastened to the charging station (71) in a releasable manner, the electrically conductive charging contact (58) in the attachment (54) being connected in an electrically conductive manner to at least one second electrically conductive charging contact (68) of the charging station (71), when the attachment (54) is fastened to the charging station (71), the attachment (54) comprising a fastening element (90) by means of which the attachment (54) is fastenable or is fastened to the charging station (71), the fastening element being a thread engaging a mating thread of the charging station (71), and/or the fastening element (90) being at least one screw (90) by means of which the attachment (54) is screwable or is screwed to the charging station (71), the attachment (54) comprising a bar (55) and two charging contact pins (56) made of plastic, in which at least one recess (57) is provided respectively, through which the electrically conductive charging contact (58) of the attachment (54) extends, and the charging contact pins (56) with the electrically conductive charging contact (58) reaching trough recesses of a circuit board (65) of the charging station (71) and the electrically conductive charging contact (58) being connected in an electrically conductive manner to the second electrically conductive charging contact (68) of the charging station (71) provided on the circuit board (65).

2. Charging station (71) according to claim 1, **characterised in that** the electrically conductive connection is a plug-in connection.

3. Charging station (71) according to any one of the preceding claims, **characterised in that** at least one charging contact (58, 68), preferably the electrically conductive charging contact (58) of the attachment (54), comprises a coating, at least partially, preferably a refinement, particularly preferably a noble metal coating, and/or the attachment comprises two charging contact pins (56) or a USB port including the charging contact (58).

4. Attachment (54) for connecting a wireless photopolymerization device (2, 52) to a charging station (71), the attachment (54) being used to be fastened to a charging station (71) according to any one of the claims 1 to 3, the attachment (54) comprising a fastening element (90) by means of which the attachment is fastenable or is fastened to the charging station (71), preferably the fastening element being a thread engaging a mating thread of the charging station (71), and/or the fastening element (90) being at least one screw (90) by means of which the attachment (54) is screwable or is screwed to the charging station (71), the attachment (54) comprising a bar (55) and two charging contact pins (56) made of plastic, in which at least one recess (57) is respectively provided, through which the electrically conductive charging contact (58) of the attachment (54) extends, and the at least one electrically conductive charging contact (58) reaching trough recesses of a circuit board (65) of the charging station (71) and being connected in electrically conductive manner to the second electrically conductive charging contact (68) of the charging station (71) provided on the circuit board (65).

5. Photopolymerization apparatus comprising a charging station (71) according to any one of the claims 1 to 3, a hand-guidable photopolymerization device (2, 52), the photopolymerization device (2, 52) comprising at least one reservoir (6) for electrical power, preferably an accumulator (6), and the photopolymerization device (2, 52) comprising at least one attachment (54) having a charging contact (8, 18, 53), and the attachment (54) being fastenable or being fastened to the charging station (71), the attachment (54) or the attachments (54) providing at least one electrically conductive connection (18, 20, 58) by means of which the reservoir (6) for electrical power is chargeable, the attachment (54) comprising a fastening element (90) by means of which the attachment is fastenable or is fastened to the charging station (71), preferably the fastening element being a thread engaging a mating thread of the charging station (71), and/or the fastening element (90) being at least one screw (90) by means of which the attachment (54) is screwable or is screwed to the charging station (71).

## Revendications

1. Station de charge (71) pour un dispositif de photopolymérisation sans fil (2, 52) pour durcissement des matériaux dentaires photopolymérisable, le dispositif de photopolymérisation (2, 52) comprenant un réservoir (6) pour du courant électrique, en particulière un accumulateur (6) ou un condensateur, et la station de charge (71) comprenant un raccordement (54) et au moins un contact de charge électriquement conducteur (58) au moyen duquel une connexion électriquement conductrice à un contact de charge d'accouplement (8, 53) du dispositif de photopolymérisation (2, 52) est réalisée pour charger le réservoir (6), lorsque le dispositif de photopolymérisation (2, 52) est connecté à la station de charge (71),
**caractérisée en ce que**
le contact de charge électriquement conducteur (58) est une partie du raccordement (54), le raccordement (54) étant fixable ou étant fixé à la station de charge (71) de manière amovible, le contact de charge électriquement conducteur (58) dans le raccordement (54) étant connecté de manière électriquement conductrice à au moins une deuxième contact de charge électriquement conducteur (68) de la station de charge (71), lorsque le raccordement (54) est fixé à la station de charge (71), le raccordement (54) comprenant un élément de fixation (90) au moyen duquel le raccordement (54) étant fixable ou étant fixé à la station de charge (71), l'élément de fixation étant un filetage engrenant un filetage d'accouplement de la station de charge (71), et/ou l'élément de fixation (90) étant au moins une vis (90) au moyen de laquelle le raccordement (54) est vissable ou est vissé à la station de charge (71), le raccordement (54) comprenant une traverse (55) et deux broches de contact de charge (56) fait de plastique, dans lesquelles au moins une encoche (57) est fournie respectivement, au travers de laquelle le contact de charge électriquement conducteur (58) du raccordement (54) s'étend, et les broches de contact de charge (56) avec le contact de charge électriquement conducteur (58) atteignant au travers des encoches d'un circuit imprimé (65) de la station de charge (71) et le contact de charge électriquement conducteur (58) étant connecté de manière électriquement conductrice au deuxième contact de charge électriquement conducteur (68) de la station de charge (71) fourni sur le circuit imprimé (65).

2. Station de charge (71) selon la revendication 1, **caractérisée en ce que** la connexion électriquement conductrice est une fiche de raccordement.

3. Station de charge (71) selon l'une des revendications précédents, **caractérisée en ce qu'** au moins un contact de charge (58, 68), de préférence le contact de charge électriquement conducteur (58) du raccordement (54), comprend un revêtement, au moins partiellement, de préférence un raffinement, de préférence particulaire un revêtement de métal précieux, et/ou le raccordement comprend deux broches de contact de charge (56) ou un port USB incluant le contact de charge (58).

4. Raccordement (54) pour connectant un dispositif de photopolymérisation sans fil (2,52) à une station de charge (71), le raccordement (54) étant utilisé d'être fixé à une station de charge selon l'une des revendications 1 à 3, le raccordement (54) comprenant un élément de fixation (90) au moyen duquel le raccordement (54) est fixable ou est fixé à la station de charge (71), l'élément de fixation étant un filetage engrenant un filetage d'accouplement de la station de charge (71), et/ou l'élément de fixation (90) étant au moins une vis (90) au moyen de laquelle le raccordement (54) est vissable ou est vissé à la station de charge (71), le raccordement (54) comprenant une traverse (55) et deux broches de contact de charge (56) fait de plastique, dans lesquelles au moins une encoche (57) est fournie respectivement, au travers de laquelle le contact de charge électriquement conducteur (58) du raccordement (54) s'étend, et le contact de charge électriquement conducteur (58) atteignant au travers des encoches d'un circuit imprimé (65) de la station de charge (71) et étant connecté de manière électriquement conductrice au deuxième contact de charge électriquement conducteur (68) de la station de charge (71) fourni sur le circuit imprimé (65).

5. Appareil de photopolymérisation comprenant une station de charge (71) selon l'une des revendications 1 à 3, un dispotif à main de photopolymérisation (2, 52), le dispositif de photopolymérisation (2, 52) comprenant au moins un réservoir (6) pour du courant électrique, de préférence un accumulateur (6), et le dispositif de photopolymérisation comprenant au moins un raccordement (54) ayant un contact de charge (8, 18, 53), et le raccordement (54) étant fixable ou étant fixé/s à la station de charge (71), le raccordement (54) ou les raccordements (54) fournissant au moins une connexion électriquement conductrice (18, 20, 58) au moyen de laquelle le réservoir (6) pour du courant électrique est chargeable, le raccordement (54) comprenant un élément de fixation (90) au moyen duquel le raccordement (54) est fixable ou est fixé à la station de charge (71), de préférence l'élément de fixation étnat un filetage engrenant un filetage d'accouplement de la station de charge (71), et/ou l'élément de fixation (90) étant au moins une vis (90) au moyen de laquelle le raccordement (54) est vissable ou est vissé à la station de charge (71).
